(19) Europäisches Patentamt
European Patent Office
Office européen des brevets

(11) **EP 3 825 714 A2**

(12) **EUROPEAN PATENT APPLICATION**

(43) Date of publication:
**26.05.2021 Bulletin 2021/21**

(51) Int Cl.:
**G01S 1/20** (2006.01)  **G01S 5/02** (2010.01)
**G01S 5/14** (2006.01)

(21) Application number: **21164266.5**

(22) Date of filing: **23.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **02.09.2020 CN 202010911924**

(71) Applicant: **BEIJING BAIDU NETCOM SCIENCE AND TECHNOLOGY CO. LTD.**
**100085 Beijing (CN)**

(72) Inventor: **WANG, Kun**
**BEIJING, 100085 (CN)**

(74) Representative: **Viering, Jentschura & Partner mbB**
**Patent- und Rechtsanwälte**
**Am Brauhaus 8**
**01099 Dresden (DE)**

(54) **VEHICLE INFRASTRUCTURE COOPERATIVE POSITIONING METHOD AND APPARATUS, ELECTRONIC DEVICE, AND AUTONOMOUS VEHICLE**

(57) A vehicle infrastructure cooperative positioning method and apparatus, an electronic device, a storage medium, and an autonomous vehicle are provided, which are related to fields of autonomous driving, intelligent transportation, and vehicle infrastructure cooperation. An implementation includes: receiving broadcast information sent by a road side unit, the broadcast information comprising sending time, a height of the road side unit and location information of the road side unit (S110); cal-culating a horizontal distance between a vehicle and the road side unit according to receiving time and the sending time of the broadcast information and the height of the road side unit (S120); and matching the horizontal distance between the vehicle and the road side unit and the location information of the road side unit with map information to obtain location information of the vehicle (S130).

receiving broadcast information sent by a road side unit, the broadcast information comprising sending time, a height of the road side unit and location information of the road side unit — S110

calculating a horizontal distance between a vehicle and the road side unit according to reception time and the sending time of the broadcast information and the height of the road side unit — S120

matching the horizontal distance between the vehicle and the road side unit, and the location information of the road side unit with map information to obtain location information of the vehicle — S130

**FIG. 1**

# Description

## TECHNICAL FIELD

The present disclosure relates to fields of autonomous driving, intelligent transportation and vehicle infrastructure cooperation, and is applicable to navigation positioning.

## BACKGROUND

Stable high-precision positioning is an important guarantee for safe travelling of automobiles. Under open infrastructure conditions, longitude and latitude information of a vehicle can be obtained by combining the Global Navigation Satellite System (GNSS), the Real-time Kinematic (RTK) and the Inertial Navigation System (INS). However, in a special road section such as a tunnel, satellite signals are interrupted, and high-precision positioning of the vehicle cannot be achieved through the GNSS and the RTK methods, thereby affecting the normal and safe travelling of the vehicle. Therefore, it is necessary to solve the problem of high-precision positioning of the vehicle when there is no GNSS signal in the special road section.

At present, all the technical solutions for solving the problem of the high-precision positioning of the vehicle when there is no GNSS signal on a special road section require an installation of a large number of devices on a road side and a vehicle end, which is costly and difficult to be commercialized.

## SUMMARY

The present disclosure provides a vehicle infrastructure cooperative positioning method and apparatus, a device, and a storage medium.

According to a first aspect of the present disclosure, there is provided a vehicle infrastructure cooperative positioning method, including:

receiving broadcast information sent by a road side unit, the broadcast information including sending time, a height of the road side unit and location information of the road side unit;

calculating a horizontal distance between a vehicle and the road side unit according to reception time and the sending time of the broadcast information and the height of the road side unit; and

matching the horizontal distance between the vehicle and the road side unit and the location information of the road side unit with map information to obtain location information of the vehicle.

According to a second aspect of the present disclosure, there is provided a vehicle infrastructure cooperative positioning apparatus, including:

a reception unit configured to receive broadcast information sent by a road side unit, the broadcast information including sending time, a height of the road side unit and location information of the road side unit;

a calculation unit configured to calculate a horizontal distance between a vehicle and the road side unit according to reception time and the sending time of the broadcast information and the height of the road side unit; and

a matching unit configured to match the horizontal distance between the vehicle and the road side unit and the location information of the road side unit with map information to obtain location information of the vehicle.

According to a third aspect of the present disclosure, there is provided an electronic device, including:

at least one processor; and

a memory communicatively connected to the at least one processor, wherein the memory stores instructions executable by the at least one processor, the instructions are executed by the at least one processor to enable the at least one processor to perform the method provided by any embodiment of the present disclosure.

According to a fourth aspect of the present disclosure, there is provided a non-transitory computer readable storage medium for storing computer instructions. The computer instructions, when executed by a computer, cause the computer to perform the method provided by any embodiment of the present disclosure.

According to a fifth aspect of the present disclosure, there is provided an autonomous vehicle, including:

at least one processor; and

a memory communicatively connected to the at least one processor, wherein the memory stores instructions executable by the at least one processor, the instructions are executed by the at least one processor to enable the at least one processor to perform the method provided by any embodiment of the present disclosure.

Any one of the above embodiments has the following advantages or beneficial effects: high-precision positioning of the vehicle can be achieved in a case where no satellite signal is received. There are less devices to be deployed, the cost is low, and the method is simple, which is convenient for implementation and promotion.

It should be understood that the content described in this section is intended neither to identify the key or important features of the embodiments of the present disclosure, nor to limit the scope of the present disclosure. Other features of the present disclosure will be easily understood from the following description.

## BRIEF DESCRIPTION OF THE DRAWINGS

The accompanying drawings are provided for better understanding of the solution, rather than limiting the present disclosure. In which,

FIG. 1 is a flowchart of a vehicle infrastructure cooperative positioning method according to an embodiment of the present disclosure;
FIG. 2 is a schematic diagram of a device deployment for a vehicle infrastructure cooperative positioning method according to an embodiment of the present disclosure;
FIG. 3 is a calculation flowchart of a vehicle infrastructure cooperative positioning method according to an embodiment of the present disclosure;
FIG. 4 is a schematic diagram of an algorithm of a vehicle infrastructure cooperative positioning method according to an embodiment of the present disclosure;
FIG. 5 is a matching flowchart of a vehicle infrastructure cooperative positioning method according to an embodiment of the present disclosure;
FIG. 6 is a schematic diagram of an algorithm of a vehicle infrastructure cooperative positioning method according to an embodiment of the present disclosure;
FIG. 7 is a flowchart of a vehicle infrastructure cooperative positioning method according to an embodiment of the present disclosure;
FIG. 8 is a schematic diagram of a vehicle infrastructure cooperative positioning apparatus according to an embodiment of the present disclosure;
FIG. 9 is a schematic diagram of a calculation unit of a vehicle infrastructure cooperative positioning apparatus according to an embodiment of the present disclosure;
FIG. 10 is a schematic diagram of a vehicle infrastructure cooperative positioning apparatus according to another embodiment of the present disclosure;
FIG. 11 is a schematic diagram of a vehicle infrastructure cooperative positioning apparatus according to another embodiment of the present disclosure; and
FIG. 12 is a block diagram of an electronic device for implementing a vehicle infrastructure cooperative positioning method according to an embodiment of the present disclosure.

## DETAILED DESCRIPTION OF THE EMBODIMENTS

Exemplary embodiments of the present disclosure are described below with reference to the accompanying drawings, including various details of the embodiments of the present disclosure to facilitate the understanding, and they should be considered as merely exemplary. Thus, it should be realized by those of ordinary skill in the art that various changes and modifications can be made to the embodiments described here without departing from the scope and spirit of the present disclosure. Also, for the sake of clarity and conciseness, the contents of well-known functions and structures are omitted in the following description.

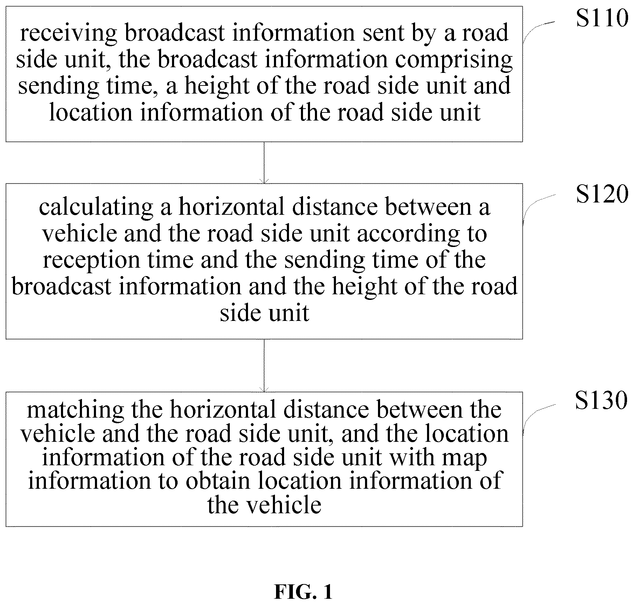

FIG. 1 is a flowchart of a vehicle infrastructure cooperative positioning method according to an embodiment of the present disclosure. Referring to FIG. 1, the vehicle infrastructure cooperative positioning method includes:

S110: receiving broadcast information sent by a road side unit, the broadcast information including sending time, a height of the road side unit and location information of the road side unit;
S 120: calculating a horizontal distance between a vehicle and the road side unit according to reception time and the sending time of the broadcast information and the height of the road side unit; and
S130: matching the horizontal distance between the vehicle and the road side unit and the location information of the road side unit with map information to obtain location information of the vehicle.

The high-precision satellite positioning is an important guarantee for safe travelling of automobiles. For example, the positioning error of autonomous driving should be controlled within a centimeter level. However, in a special road section such as a tunnel, satellite signals are interrupted, and high-precision positioning of the vehicle cannot be achieved through the GNSS and the RTK method. In related arts, the following methods are available to solve the problem of high-precision positioning of an autonomous vehicle when there is no GNSS signal in a tunnel:

(1) A positioning technical solution based on a GNSS simulator (a pseudo-satellite technology): a satellite-ground time synchronization technology is adopted to ensure that system time of a pseudo-satellite in a tunnel is strictly consistent with time of a real on-orbit satellite, a motion state of a GNSS satellite is simulated in real time, and satellite navigation messages are calculated, marshalled and broadcasted to a general navigation terminal such as a vehicle, a mobile phone, etc.
An Ultra Wideband (UWB) positioning technical solution: a UWB communication base station is deployed in a tunnel to realize high-precision positioning in the tunnel in combination with a vehicle-side module.
(3) A positioning technical solution depending on a vehicle vision or a radar.

Any of the above solutions requires to install a large number of devices on the infrastructure side and the vehicle end, which is costly and difficult to be commercialized.

In view of this circumstance, the embodiment of the present disclosure provides a simple and practicable vehicle infrastructure cooperative positioning method, which does not require to install a large number of costly devices and can realize high-precision positioning of the vehicle without satellite signals. Taking a special road section where a tunnel is located as an example, in the embodiment of the present disclosure, the following devices and systems may be deployed on the infrastructure side and the vehicle end in advance:

(1) A Road Side Unit (RSU) is deployed at a tunnel entrance.
(2) An On-Board Unit (OBU) is deployed on the vehicle end to receive information issued by the RSU.
(3) A high-precision map is deployed on the vehicle end;
(4) An On-board Computing Unit (OCU) is deployed on the vehicle end. A positioning algorithm is deployed in the OCU to calculate and process data in real time, and accurate location information of the vehicle can be obtained by calculation.

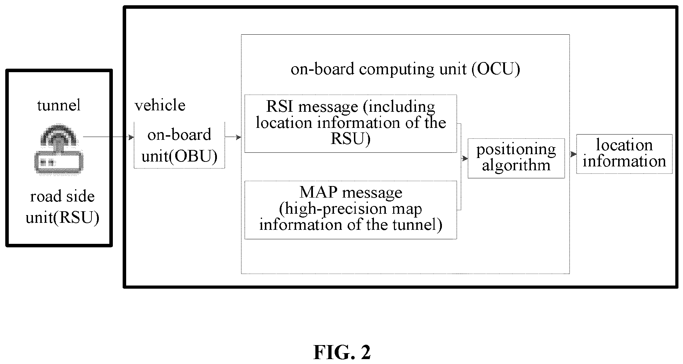

FIG. 2 is a schematic diagram of a device deployment of a vehicle infrastructure cooperative positioning method according to an embodiment of the present disclosure. As shown in FIG. 2, in one embodiment, a Road Side Unit (RSU) may be deployed at a tunnel entrance. In another embodiment, the RSU may also be deployed at a certain location of a road section where a tunnel is located. The RSU may send broadcast information in real time. After receiving the broadcast information sent by the RSU, an On-Board Unit (OBU) sends the broadcast information to an On-Board Computing Unit (OCU). The OCU analyzes the broadcast information, calculates and processes data in the broadcast information using a positioning algorithm, and obtains accurate location information of a vehicle by calculation and matching with map information in a high-precision map. Referring to FIGS. 1 and 2, the broadcast information sent by the Road Side Unit (RSU) may include the following data:

1) A time stamp for indicating sending time of the broadcast information.
2) A height of the Road Side Unit (RSU). The height of the RSU may be a height h of an installation point of the RSU from the ground.
3) Location information of the Road Side Unit (RSU). The location information of the RSU may be expressed with xyz coordinates in a world coordinate system. The location information of the RSU may include data such as latitude and longitude, elevation, etc.

At step S110, the On-Board Unit (OBU) receives the broadcast information sent by the Road Side Unit (RSU), and records reception time when the broadcast information is received. Next, the On-Board Unit (OBU) sends the broadcast information and the reception time to the On-Board Computing Unit (OCU). At step S120, the OCU analyzes the broadcast information, calculates data in the broadcast information using a positioning algorithm, and obtains a horizontal distance between the vehicle and the road side unit by calculation. At step S130, the OCU obtains map information from a high-precision map, then matches location information of the road side unit in the broadcast information and the calculated horizontal distance between the vehicle and the road side unit with the map information, and obtains the location information of the vehicle by matching.

In the embodiment of the present disclosure, by receiving at the on-board unit, the broadcast information sent by the road side unit, and then obtaining the location information of the vehicle according to the broadcast information and the map information, the high-precision positioning of the vehicle can be achieved in a case where no satellite signal is received. There are less devices to be deployed, the cost is low, and the method is simple, which is convenient for implementation and promotion.

In the embodiment of the present disclosure, the high-precision map may be deployed on the vehicle end in advance, or information of the high-precision map may be obtained from the broadcast information sent by the road side unit. As shown in FIG. 2, Road Side Information (RSI) and the map (MAP) may be two types of messages sent by the RSU, wherein the RSI means road side sign and signage information or traffic event information sent by the road side unit to the on-board unit. The RSI may specifically include a time stamp, a height of the Road Side Unit (RSU) and location information of the Road Side Unit (RSU). The MAP information may be map information of a local area sent by the road side unit to the on-board unit. The MAP information may include intersection information, road section information, lane information, road connection information, etc. of the local area.

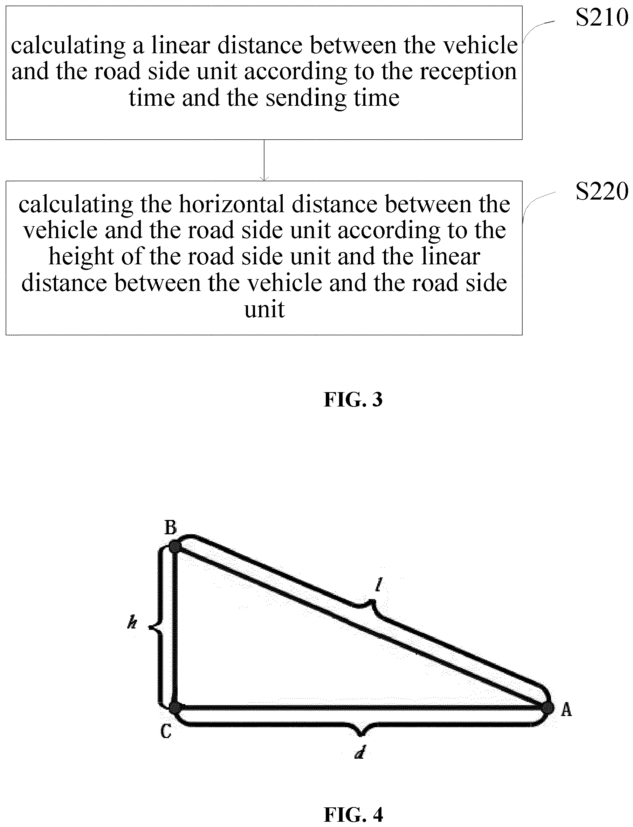

FIG. 3 is a calculation flowchart of a vehicle infrastructure cooperative positioning method according to an embodiment of the present disclosure. As shown in FIG. 3, in one embodiment, in step S120 in FIG. 1, calculating the horizontal distance between the vehicle and the road side unit according to reception time and the sending time of the broadcast information and the height of the road side unit may specifically include:

S210: calculating a linear distance between the vehicle and the road side unit according to the reception time and the sending time; and
S220: calculating the horizontal distance between the vehicle and the road side unit according to the height of the road side unit and the linear distance between the vehicle and the road side unit.

FIG. 4 is a schematic diagram of an algorithm of a vehicle infrastructure cooperative positioning method according to an embodiment of the present disclosure. In one example where a Road Side Unit (RSU) is deployed at a tunnel entrance, Point A in FIG. 4 represents a location of a vehicle; Point C represents a tunnel entrance, i.e., a deployment location of the RSU; Point B represents a location of the RSU; Point C is a horizontal projection point of Point B, e.g., the RSU is deployed at a location with a height $h$ from the ground at the tunnel entrance; a length $h$ of a line segment BC represents the height of the RSU; a length 1 of a line segment AB represents a linear distance between the vehicle and the Road Side Unit (RSU); and a length d of a line segment AC represents a horizontal distance between the vehicle and the Road Side Unit (RSU).

Referring to FIG. 4, firstly in step S210, the linear distance $l$ between the vehicle and the road side unit is calculated according to the reception time and the sending time of the broadcast information. Next, in step S220, the horizontal distance $d$ between the vehicle and the road side unit is calculated according to the height $h$ of the road side unit and the linear distance $l$ between the vehicle and the road side unit.

In the embodiment of the present disclosure, the horizontal distance between the vehicle and the road side unit is calculated according to the broadcast information and the reception time. In the subsequent processing procedure, the horizontal distance is an important basis for matching with the map information, and the location information of the vehicle can be obtained by matching. The above method is simple and practical with a small calculation amount and a high accuracy, so it is convenient for implementation and promotion.

In one embodiment, in step S210 in FIG. 3, calculating the linear distance between the vehicle and the road side unit according to the reception time and the sending time may include:

calculating transmission time of the broadcast information according to the reception time and the sending time; and
calculating the linear distance between the vehicle and the road side unit according to the transmission time and a transmission speed of the broadcast information.

In this embodiment, calculating transmission time of the broadcast information according to the reception time and the sending time may specifically include: subtracting the sending time from the reception time to obtain the transmission time of the broadcast information. For example, if the On-Board Unit (OBU) receives, at a moment $t_0+\Delta t$, the broadcast information sent by the RSU at a moment to, the transmission time of the broadcast information is $\Delta t$. The OBU sends the broadcast information and the reception time to the On-Board Computing Unit (OCU) for analysis, and the linear distance $l$ between the vehicle and the RSU is obtained by calculation.

An exemplary calculation procedure is as follows: firstly, the transmission time of the broadcast information is obtained by subtracting the sending time from the reception time. Next, the linear distance $l$ between the vehicle and the RSU is calculated with the following Formula 1:

$$\text{Formula 1}: l = c * \Delta t$$

wherein c represents velocity of light, i.e., the transmission speed of the broadcast information; $l$ represents the linear distance between the vehicle and the road side unit, and $\Delta t$ represents the transmission time of the broadcast information.

In the embodiment of the present disclosure, the linear distance between the vehicle and the road side unit is calculated according to the broadcast information and the reception time. In the subsequent processing procedure, the horizontal distance between the vehicle and the road side unit may be calculated using the linear distance, and then the location information of the vehicle may be obtained by matching with the map information. The method is simple and practical with a small calculation amount and a high accuracy, so it is convenient for implementation and promotion.

In one embodiment, in step S220 in FIG. 3, calculating the horizontal distance between the vehicle and the road side unit according to the height of the road side unit and the linear distance between the vehicle and the road side unit includes calculating the horizontal distance between the vehicle and the road side unit using the following Formula 2:

$$\text{Formula 2}: d = \sqrt{l^2 - h^2}$$

wherein $d$ represents the horizontal distance between the vehicle and the road side unit, $l$ represents the linear distance between the vehicle and the road side unit, and $h$ represents the height of the road side unit.

Referring to FIG. 4 again, the linear distance $l$ between the vehicle and the road side unit has been calculated in step S210, and the height $h$ of the road side unit may be obtained from the broadcast information, so the horizontal distance $d$ between the vehicle and the road side unit may be calculated according to the above Formula 2. When the Road Side Unit (RSU) is deployed at the tunnel entrance, the horizontal distance $d$ is the linear distance between the vehicle and the tunnel entrance.

In the embodiment of the present disclosure, the horizontal distance between the vehicle and the road side unit is calculated according to the broadcast information and the linear distance between the vehicle and the road side unit. In the subsequent processing procedure, the location information of the vehicle may be obtained by matching the horizontal distance with the map information. The method is simple and practical with a small calculation amount and a high accuracy, so it is convenient for implementation and promotion.

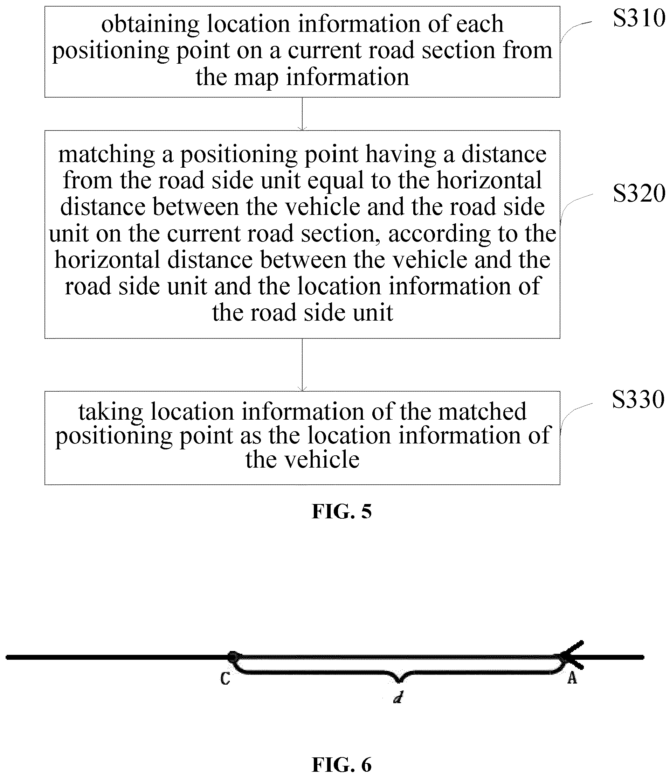

FIG. 5 is a matching flowchart of a vehicle infrastructure cooperative positioning method according to an embodiment of the present disclosure. As shown in FIG. 5, in step S130 in FIG. 1, matching the horizontal distance between the vehicle and the road side unit and the location information of the road side unit with map information to obtain location information of the vehicle may specifically includes:

> S310: obtaining location information of each positioning point on a current road section from the map information;
> S320: matching a positioning point having a distance from the road side unit equal to the horizontal distance between the vehicle and the road side unit on the current road section, according to the horizontal distance between the vehicle and the road side unit and the location information of the road side unit;
> S330: taking location information of the matched positioning point as the location information of the vehicle.

In the embodiment of the present disclosure, a high-precision map may be deployed on the vehicle end in advance. In one example, the positioning points may be set every 0.1m from a start point on each road segment in the high-precision map. The high-precision map may include MAP (map) information of the positioning points. The MAP information may include accurate location information of each positioning point marked in the map. The location information may be expressed with xyz coordinates in a world coordinate system, and may include data such as latitude and longitude, elevation, etc. The map information obtained by the OCU may include the above MAP information.

In the above step S310, the OCU obtains the location information of each positioning point on the current road section from the map information. For example, if the satellite signal is interrupted after the vehicle runs into the tunnel, information such as the current road section travelled by the vehicle and the travelling direction of the vehicle is obtained when the satellite signal is interrupted, and the broadcast information sent by the road side unit provided at the tunnel entrance or at a certain location on the road section where the tunnel is located is started to be received. Next, the location information of each positioning point on the current road section can be obtained from the map information.

In the above step S320, the location information of the road side unit is obtained from the broadcast information, and the positioning point matched with the location information of the road side unit is obtained by matching the location information of the road side unit with the high-precision map. FIG. 6 is a schematic diagram of a vehicle infrastructure cooperative positioning apparatus according to an embodiment of the present disclosure. As shown in FIG. 6, xyz coordinates of a road side unit are obtained from broadcast information, and a positioning point C is obtained by matching the xyz coordinates with the map. In step S120, the horizontal distance $d$ between the vehicle and the road side unit is calculated, and then the positioning points having the horizontal distance $d$ from the positioning point C are matched in the current road section travelled by the vehicle in the map. In one example, a change of the horizontal distance $d$ may be calculated according to the broadcast information received at more than two moments, thereby determining whether the vehicle travels close to or far away from the positioning point C. Next, a unique positioning point having the horizontal distance $d$ from the positioning point C may be matched in the current road section travelled by the vehicle according to the change of the horizontal distance $d$ and the travelling direction of the vehicle. Referring to FIG. 6, an arrow indicates the travelling direction of the vehicle, and when the vehicle is detected as being close to the positioning point C, it can be uniquely determined that the positioning point A having the horizontal distance $d$ from the positioning point C at a right side (an east side in the map) thereof is the current location of the vehicle.

In the embodiment of the present disclosure, the horizontal distance between the vehicle and the road side unit and the location information of the road side unit may be matched with the map information to obtain the location information of the vehicle. In which, the map information is of a simple deployment and a high accuracy, so that high-precision and accurate positioning can be carried out in real time, and centimeter-level high-precision positioning can be achieved in a special road section, thereby effectively avoiding the hidden troubles of travelling caused by the inability of positioning when there is no satellite signal.

In one embodiment, the broadcast information further includes map update information of the current road section.

In FIG. 5, before step S310 of obtaining location information of each positioning point on the current road section from the map information, the method further includes:

> obtaining the map update information from the broadcast information; and
> updating the map information with the map update information in a case where the map information is not matched with the map update information.

Still taking the road section where the tunnel is located as an example, the broadcast information sent by the road side unit may include the MAP information of the high-precision map of the tunnel. In one example, the MAP information marks the accurate location information of the positioning points every 0.1m from the start point. The MAP information may be stored in a server, and the server regularly maintains that the MAP information comes from the high-precision map of a latest version. The RSU obtains the MAP information from the server and then broadcasts the MAP information. A high-precision map, not necessarily of the latest version, is also deployed on the vehicle end. The MAP information included in the broadcast information sent by the RSU may be called as the map update information. After receiving the broadcast information, the vehicle end needs to update the map information thereof with the MAP information in the broadcast information, i.e., the map update information, if the high-precision map of the vehicle end is not matched with the MAP information in the broadcast information.

In the embodiment of the present disclosure, the map information is updated with the map update information, and the vehicle infrastructure cooperative positioning is carried out using the map information of the latest version, so that the positioning accuracy can be improved.

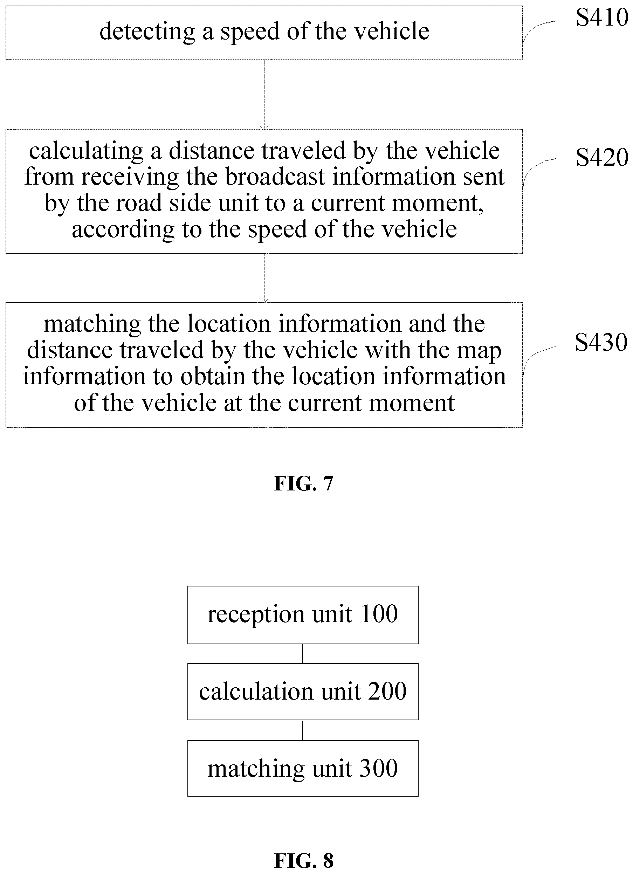

FIG. 7 is a flowchart of a vehicle infrastructure cooperative positioning method according to an embodiment of the present disclosure. As shown in FIG. 7, in one embodiment, after obtaining the location information of the vehicle, the method further includes:

S410: detecting a speed of the vehicle;
S420: calculating a distance traveled by the vehicle from receiving the broadcast information sent by the road side unit to a current moment, according to the speed of the vehicle;
S430: matching the location information and the distance traveled by the vehicle with the map information to obtain the location information of the vehicle at the current moment.

In the above method, after receiving the broadcast information sent by the road side unit, the vehicle end may obtain the location information of the vehicle based on the broadcast information. In the subsequent travelling process of the vehicle, one embodiment may be to continuously receive the broadcast information sent by the road side unit in real time, and obtain the location information of the vehicle in real time by adopting the above method. In another embodiment, in the subsequent travelling process of the vehicle, instead of using the broadcast information, the speed of the vehicle is detected, and then the vehicle infrastructure cooperative positioning is carried out with the help of the map information.

In S410, after the location information of the vehicle, i.e., the positioning point in the map, is obtained using the broadcast information, a moment at which the broadcast information sent by the road side unit is received is taken as a start moment, and a positioning point corresponding to the start moment is called as a start positioning point. The speed of the vehicle is detected from the start moment. In step S420, at any moment t, the distance s traveled from the start moment $t_1$ to the

moment t may be calculated according to the speed of the vehicle. The travelled distance s may be calculated with the following Formula 3:

$$\text{Formula 3: } s = \int_{t_1}^{t} v\, dt$$

wherein v represents a real-time speed of the vehicle, $t_1$ represents the start moment, and s represents the distance traveled from the start moment $t_1$ to any moment t.

In one example, in order to ensure the calculation precision, *dt* may be taken as 10 ms in Formula 3, i.e., the speed information of the vehicle is read every 10ms, so as to calculate the distance s traveled by the vehicle from the moment $t_1$ to the moment t.

After the distance s is calculated, the start positioning point and the distance s are matched in the high-precision map, and the positioning point corresponding to the distance s is found and taken as the location information of the vehicle at the moment t. Specifically, with reference to the similar method in the example shown in FIG. 6, the positioning point having the distance s from the start positioning point is matched in the current road section travelled by the vehicle in the map. The positioning point corresponding to the distance s, i.e., the location of the vehicle at the moment t, can be uniquely determined according to the travelling direction of the vehicle. The high-precision real-time positioning of the vehicle can be realized through the above method.

In the embodiment of the present disclosure, after the start positioning point is obtained, the high-precision real-time positioning of the vehicle can be achieved without the broadcast information. The above method is simple and practical with a small calculation amount and a high accuracy, so it is convenient for implementation and promotion.

FIG. 8 is a schematic diagram of a vehicle infrastructure cooperative positioning apparatus according to an embodiment of the present disclosure. Referring to FIG. 8, an embodiment of the present disclosure provides a vehicle infrastructure cooperative positioning apparatus, including:

a reception unit 100 configured to receive broadcast information sent by a road side unit, the broadcast information including sending time, a height of the road side unit and location information of the road side unit;
a calculation unit 200 configured to calculate a horizontal distance between a vehicle and the road side unit according to reception time and the sending time of the broadcast information and the height of the road side unit; and
a matching unit 300 configured to match the horizontal distance between the vehicle and the road side unit and the location information of the road side unit with map information to obtain location information of the vehicle.

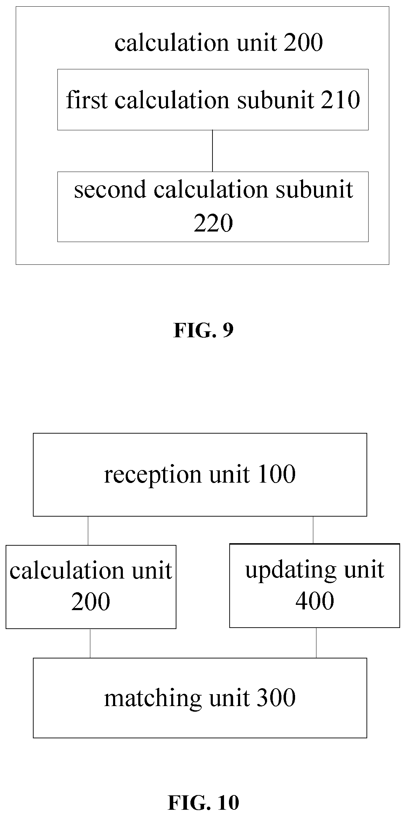

FIG. 9 is a schematic diagram of a calculation unit of a vehicle infrastructure cooperative positioning apparatus according to an embodiment of the present disclosure. Referring to FIG. 9, in one embodiment, the calculation unit 200 includes:

a first calculation subunit 210 configured to calculate a linear distance between the vehicle and the road side unit according to the reception time and the sending time; and
a second calculation subunit 220 configured to calculate the horizontal distance between the vehicle and the road side unit according to the height of the road side unit and the linear distance between the vehicle and the road side unit.

In one embodiment, the first calculation subunit 210 is configured to:

calculate transmission time of the broadcast information according to the reception time and the sending time; and
calculate the linear distance between the vehicle and the road side unit according to the transmission time and a transmission speed of the broadcast information.

In one embodiment, the second calculation subunit 220 is configured to calculate the linear distance between the vehicle and the road side unit with a formula:

$$d = \sqrt{l^2 - h^2}$$

wherein $d$ represents the horizontal distance between the vehicle and the road side unit, $l$ represents the linear distance between the vehicle and the road side unit, and $h$ represents the height of the road side unit.
In one embodiment, the matching unit 300 is configured to:

obtain location information of each positioning point on a current road section from the map information;
match the positioning point having a distance from the road side unit equal to the horizontal distance between the vehicle and the road side unit on the current road section, according to the horizontal distance between the vehicle and the road side unit and the location information of the road side unit; and
take location information of the matched positioning point as the location information of the vehicle.

FIG. 10 is a schematic diagram of a vehicle infrastructure cooperative positioning apparatus according to another embodiment of the present disclosure. Referring to FIG. 10, in one embodiment, the broadcast information further includes map update information of the current road section, and the apparatus further includes an updating unit 400 configured to:

before obtaining location information of each positioning point on the current road section from the map information, obtain the map update information from the broadcast information; and
update the map information with the map update information a case where the map information is not matched with the map update information.

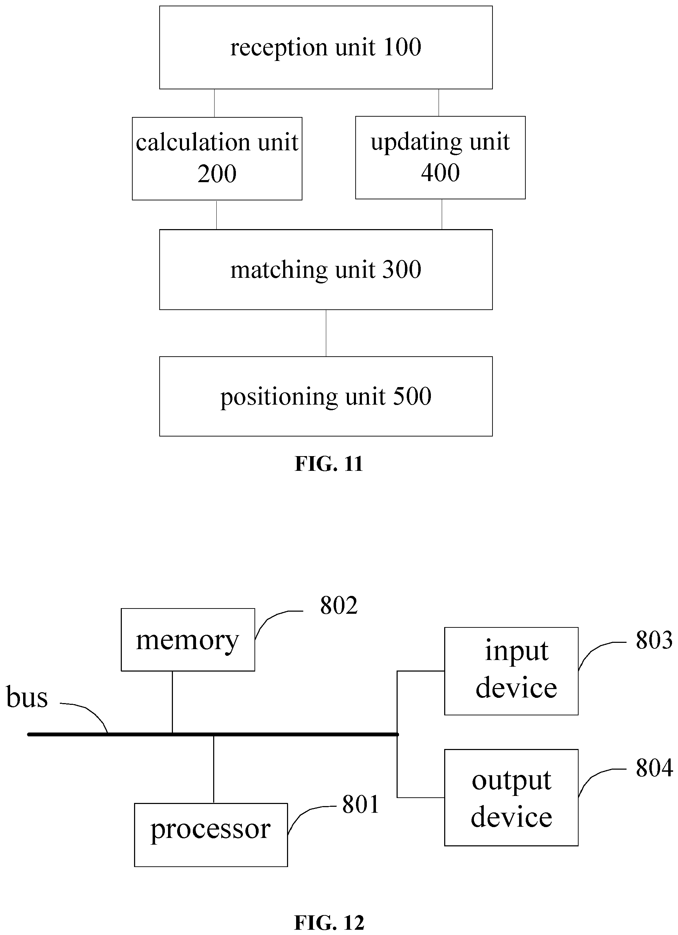

FIG. 11 is a schematic diagram of a vehicle infrastructure cooperative positioning apparatus according to another embodiment of the present disclosure. Referring to FIG. 11, in one embodiment, the apparatus further includes a positioning unit 500 configured to:

detect a speed of the vehicle after obtaining the location information of the vehicle;
calculate a distance traveled by the vehicle from receiving the broadcast information sent by the road side unit to a current moment, according to the speed of the vehicle; and
match the location information and the distance traveled by the vehicle with the map information to obtain the location information of the vehicle at the current moment.

For the functions of the units in each apparatus according to the embodiments of the present disclosure, please refer to the corresponding descriptions in the above methods, and will not be described in detail here.
According to the embodiments of the present disclosure, the present disclosure further provides an electronic device and a readable storage medium.
FIG. 12 is a block diagram of an electronic device for implementing a vehicle infrastructure cooperative positioning method according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processor, a cellular phone, a smart phone, a wearable device and other similar computing devices. The components illustrated herein, connections and relationships therebetween, and functions thereof are merely examples, and are not intended to limit the implementation of the present disclosure described and/or claimed herein.
As shown in FIG. 12, the electronic device includes: one or more processors 801, a memory 802, and interfaces for connecting various components, including a high-speed interface and a low-speed interface. The various components are connected to each other by different buses, and may be mounted on a common mainboard or mounted in other ways as required. The processor may process instructions executed in the electronic device, including instructions stored in or on the memory to display Graphical User Interface (GUI) graphical information on an external input/output device (e.g., a display device coupled to an interface). In other embodiments, if necessary, a plurality of processors and/or a plurality of buses may be used together with a plurality of memories. Similarly, a plurality of electronic devices may be connected, each providing some necessary operations (e.g., acting as a server array, a group of blade servers, or a multi-processor system). In FIG. 12, one processor 801 is taken as an example.

The memory 802 is a non-transitory computer-readable storage medium provided by the present disclosure. The memory stores instructions executable by at least one processor, so that the at least one processor can perform the vehicle infrastructure cooperative positioning method provided by the present disclosure. The non-transitory computer-readable storage medium of the present disclosure stores a computer instruction for enabling a computer to perform the vehicle infrastructure cooperative positioning method provided by the present disclosure.

As a non-transitory computer readable storage medium, the memory 802 may be configured to store a non-transitory software program, a non-transitory computer executable program and modules, such as program instructions/modules corresponding to the vehicle infrastructure cooperative positioning method in the embodiments of the present disclosure (e.g., the reception unit 100, the calculation unit 200 and the matching unit 300 as shown in FIG. 8, the first calculation unit 210 and the second calculation unit 220 as shown in FIG. 9, the updating unit 400 as shown in FIG. 10, and the positioning unit 500 as shown in FIG. 11). The processor 801 executes various functional applications and data processing of the electronic device by running the non-transitory software programs, instructions and modules stored in the memory 802, thereby performing various function applications of the server and the data processing, i.e., implementing the vehicle infrastructure cooperative positioning method in the above method embodiment.

The memory 802 may include a program storage area and a data storage area, wherein the program storage area may store an operating system, and an application program required by at least one function; and the data storage area may store data created according to the use of the electronic device for implementing the vehicle infrastructure cooperative positioning method. In addition, the memory 802 may include a high-speed random-access memory, and may also include a non-transitory memory, such as at least one magnetic disk memory device, a flash memory device, or any other non-transitory solid memory device. In some embodiments, the memory 802 optionally includes memories remotely located relative to the processor 801, and these remote memories may be connected to the electronic device for implementing the vehicle infrastructure cooperative positioning method through a network. Examples of the network include, but are not limited to, the Internet, an intranet, a local area network, a mobile communication network and combinations thereof.

The electronic device for implementing the vehicle infrastructure cooperative positioning method may further include: input means 803 and output means 804. The processor 801, the memory 802, the input means 803, and the output means 804 may be connected by buses or in other ways, and the bus connection is taken as an example in FIG. 8.

The input means 803 may receive input digitals or character information, and generate a key signal input related to a user setting and a function control of the electronic device for implementing the vehicle infrastructure cooperative positioning method. The input means 803 for example may be a touch screen, a keypad, a mouse, a track pad, a touch pad, an indicator stick, one or more mouse buttons, a trackball, a joystick, etc. The output means 804 may include a display device, an auxiliary lighting apparatus (e.g., a light-emitting diode (LED)), a haptic feedback apparatus (e.g., a vibration motor), etc. The display device may include, but is not limited to, a liquid crystal display (LCD), an LED display, and a plasma display. In some embodiments, the display device may be a touch screen.

Various embodiments of the system and technology described here may be implemented in a digital electronic circuit system, an integrated circuit system, an Application Specific Integrated Circuit (ASIC), computer hardware, firmware, software, and/or combinations thereof. These various embodiments may be implemented in one or more computer programs executable and/or interpretable on a programmable system including at least one programmable processor, and the programmable processor may be a dedicated or general programmable processor and capable of receiving and transmitting data and instructions from and to a storage system, at least one input means, and at least one output means.

These computing programs (also called as programs, software, software applications, or codes) include machine instructions of the programmable processor, and may be implemented with advanced processes and/or object-oriented programming languages, and/or assembly/machine languages. As used herein, the terms 'machine-readable medium' and 'computer-readable medium' refer to any computer program product, device, and/or apparatus (e. g., a magnetic disk, an optical disk, a memory and a programmable logic device (PLD)) for providing the machine instructions and/or the data to the programmable processor, including a machine-readable medium that receives machine instructions as machine-readable signals. The term 'machine readable signal' refers to any signal for providing the machine instructions and/or the data to the programmable processor.

In order to provide an interaction with a user, the system and the technology described here may be implemented on a computer having a display device (e. g., a cathode ray tube (CRT) or an LCD monitor) for displaying information to the user; and a keyboard and a pointing apparatus (e. g., a mouse or a trackball), through which the user can provide an input to the computer. Other kinds of apparatuses can also provide an interaction with the user. For example, a feedback provided to the user may be any form of sensory feedback (e.g., a visual feedback, an auditory feedback, or a tactile feedback); and an input from the user may be received in any form (including an acoustic input, a voice input or a tactile input).

The system and the technology described here may be embodied in a computing system including background components (e.g., acting as a data server), or a computing system including middleware components (e.g., an application server), or a computing system including front-end components (e.g., a user computer with a graphical user interface or a web browser, through which the user can interact with the embodiments of the system and technology described here), or a computing system including any combination of such background components, middleware components and front-end components. The components of the system may be connected to each other through a digital data communication in any form or medium (e.g., a communication network). Examples of the communication network include a local area network (LAN), a wide area network (WAN) and the Internet.

A computer system may include a client and a server. The client and the server are generally remote from each other and usually interact through a communication network. The relationship between the client and the server is generated by computer programs running on corresponding computers and having a client-server relationship with each other. The server may be a cloud server, also called as a cloud computing server or a cloud host, which is a host product in a cloud computing service system, to solve the defects of difficult management and weak business expansibility in the services of the traditional physical host and the virtual private server (VPS).

According to the embodiments of the present disclosure, the present disclosure further provides an autonomous vehicle, including:

at least one processor; and
a memory communicatively connected to the at least one processor; wherein,
the memory stores instructions that are executable by the at least one processor to enable the at least one processor to perform the method provided by any embodiment of the present disclosure.

For the functions of the processor and the memory in the autonomous vehicle according to the embodiment of the present disclosure, please refer to the related descriptions of the above electronic device, and will not be described in detail here.

According to the technical solutions of the embodiments of the present disclosure, high-precision positioning of the vehicle can be achieved in a case where no satellite signal is received. There are less devices to be deployed, the cost is low, and the method is simple, which is convenient for implementation and promotion.

It should be understood that the steps may be reordered, added or deleted using the various forms of flows as illustrated above. For example, the steps described in the present disclosure may be performed concurrently, sequentially or in a different order, so long as the desired result of the technical solution disclosed in the present disclosure can be achieved, which is not limited herein.

Those specific embodiments do not limit the protection scope of the present disclosure. It should be understood by those skilled in the art that various modifications, combinations, subcombinations and replacements can be made according to the design requirements and other factors. Any modification, equivalent replacement and improvement made under the spirit and principle of the present disclosure should fall within the protection scope of the present disclosure.

## Claims

1.  A vehicle infrastructure cooperative positioning method, comprising:

receiving (S110) broadcast information sent by a road side unit, the broadcast information comprising sending time, a height of the road side unit and location information of the road side unit;
calculating (S120) a horizontal distance between a vehicle and the road side unit according to reception time and the sending time of the broadcast information and the height of the road side unit; and
matching (S130) the horizontal distance between the vehicle and the road side unit, and the location information of the road side unit with map information to obtain location information of the vehicle.

2.  The vehicle infrastructure cooperative positioning method according to claim 1, wherein calculating (S120) the horizontal distance between the vehicle and the road side unit according to reception time and the sending time of the broadcast information and the height of the road side unit comprises:

calculating (S210) a linear distance between the vehicle and the road side unit according to the reception time and the sending time; and
calculating (S220) the horizontal distance between the vehicle and the road side unit according to the height of the road side unit and the linear distance between the vehicle and the road side unit.

3. The vehicle infrastructure cooperative positioning method according to claim 2, wherein calculating (S210) the linear distance between the vehicle and the road side unit according to the reception time and the sending time comprises:

calculating transmission time of the broadcast information according to the reception time and the sending time; and
calculating the linear distance between the vehicle and the road side unit according to the transmission time and a transmission speed of the broadcast information.

4. The vehicle infrastructure cooperative positioning method according to claim 2 or 3, wherein calculating (S220) the horizontal distance between the vehicle and the road side unit according to the height of the road side unit and the linear distance between the vehicle and the road side unit comprises calculating the horizontal distance between the vehicle and the road side unit using a formula:

$$d = \sqrt{l^2 - h^2}$$

wherein $d$ represents the horizontal distance between the vehicle and the road side unit, $l$ represents the linear distance between the vehicle and the road side unit, and $h$ represents the height of the road side unit.

5. The vehicle infrastructure cooperative positioning method according to any one of claims 1 to 4, wherein matching (S130) the horizontal distance between the vehicle and the road side unit, and the location information of the road side unit with map information to obtain location information of the vehicle comprises:

obtaining (S310) location information of each positioning point on a current road section from the map information;
matching (S320) a positioning point having a distance from the road side unit equal to the horizontal distance between the vehicle and the road side unit on the current road section, according to the horizontal distance between the vehicle and the road side unit and the location information of the road side unit; and
taking (S330) location information of the matched positioning point as the location information of the vehicle.

6. The vehicle infrastructure cooperative positioning method according to claim 5, wherein the broadcast information further comprises map update information of the current road section;
before obtaining (S310) location information of each positioning point on the current road section from the map information, the method further comprises:

obtaining the map update information from the broadcast information; and
updating the map information with the map update information in a case where the map information is not matched with the map update information.

7. The vehicle infrastructure cooperative positioning method according to any one of claims 1 to 6, wherein after obtaining the location information of the vehicle, the method further comprises:

detecting (S410) a speed of the vehicle;
calculating (S420) a distance traveled by the vehicle from receiving the broadcast information sent by the road side unit to a current moment, according to the speed of the vehicle; and
matching (S430) the location information and the distance traveled by the vehicle with the map information to obtain the location information of the vehicle at the current moment.

8. A vehicle infrastructure cooperative positioning apparatus, comprising a plurality of units configured to implement the vehicle infrastructure cooperative positioning method according to any one of claims 1 to 7.

9. An electronic device, comprising:

at least one processor (801); and
a memory (802) communicatively connected to the at least one processor (801), wherein the memory (802) stores instructions executable by the at least one processor (801), the instructions, when executed by the at least one processor (801), enable the at least one processor (801) to perform the vehicle infrastructure cooperative positioning method according to any one of claims 1 to 7.

10. A computer-readable storage medium for storing computer instructions, wherein the computer instructions, when executed by a computer, cause the computer to implement the vehicle infrastructure cooperative positioning method according to any one of claims 1 to 7.

11. An autonomous vehicle, comprising:

at least one processor (801); and a memory (802) communicatively connected to the at least one processor (801), wherein the memory (802) stores instructions executable by the at least one processor (801), the instructions, when executed by the at least one processor (801), enable the at least one processor (801) to perform the vehicle infrastructure cooperative positioning method according to any one of claims 1 to 7.

12. A computer program product comprising computer executable instructions stored thereon, wherein the executable instructions, when executed by a processor (801), cause the processor (801) to implement the vehicle infrastructure cooperative positioning method according to any one of claims 1 to 7.

receiving broadcast information sent by a road side unit, the broadcast information comprising sending time, a height of the road side unit and location information of the road side unit  — S110

calculating a horizontal distance between a vehicle and the road side unit according to reception time and the sending time of the broadcast information and the height of the road side unit  — S120

matching the horizontal distance between the vehicle and the road side unit, and the location information of the road side unit with map information to obtain location information of the vehicle  — S130

**FIG. 1**

**FIG. 2**

calculating a linear distance between the vehicle and the road side unit according to the reception time and the sending time ⟋ S210

calculating the horizontal distance between the vehicle and the road side unit according to the height of the road side unit and the linear distance between the vehicle and the road side unit ⟋ S220

**FIG. 3**

**FIG. 4**

obtaining location information of each positioning point on a current road section from the map information — S310

matching a positioning point having a distance from the road side unit equal to the horizontal distance between the vehicle and the road side unit on the current road section, according to the horizontal distance between the vehicle and the road side unit and the location information of the road side unit — S320

taking location information of the matched positioning point as the location information of the vehicle — S330

**FIG. 5**

C $d$ A

**FIG. 6**

detecting a speed of the vehicle — S410

calculating a distance traveled by the vehicle from receiving the broadcast information sent by the road side unit to a current moment, according to the speed of the vehicle — S420

matching the location information and the distance traveled by the vehicle with the map information to obtain the location information of the vehicle at the current moment — S430

**FIG. 7**

reception unit 100

calculation unit 200

matching unit 300

**FIG. 8**

calculation unit 200

first calculation subunit 210

second calculation subunit 220

**FIG. 9**

reception unit 100

calculation unit 200

updating unit 400

matching unit 300

**FIG. 10**

reception unit 100

calculation unit 200

updating unit 400

matching unit 300

positioning unit 500

**FIG. 11**

memory — 802

bus —

input device — 803

output device — 804

processor — 801

**FIG. 12**